# EUROPEAN PATENT APPLICATION

(11) **EP 2 653 692 A1**
(43) Date of publication of application: **23.10.2013**
(21) Application number: 10860793.8
(22) Date of filing: 17.12.2010
(51) Int. Cl.: F02B 37/007, F01N 3/24, F02B 37/00

(54) **EXHAUST HEATING DEVICE FOR INTERNAL COMBUSTION ENGINE AND CONTROL METHOD THEREFOR**

(71) Applicant: TOYOTA JIDOSHA KABUSHIKI KAISHA, Toyota-shi, Aichi-ken, 471-8571 (JP)
(72) Inventor: TAKEUCHI, Naoki, Toyota-shi, Aichi-ken 471-8571 (JP)
(74) Representative: Intès, Didier Gérard André
(86) International application number: PCT/JP2010/007331
(87) International publication number: WO 2012/081061

(57) **Abstract**

An exhaust heating device (39) according to the present invention for heating an exhaust gas led to an exhaust purifying device (31) from an internal combustion engine (10) is disposed in a second exhaust passage (28s) that is located upstream of a confluent portion (26c) of a first exhaust passage (27f) connected through an exhaust turbine (29b) of a first turbocharger (29) to the purifying device and the second passage connected to the purifying device through an exhaust turbine (30b) of a second exhaust turbocharger (30) used primarily in a lower speed range of the engine than the first turbocharger in a state of bypassing the turbine of the first turbocharger and downstream of the turbine of the second turbocharger, and a valve (36) capable of regulating a flow of the exhaust gas flowing in the second passage is disposed in the second passage that is located downstream of a branch portion (26d) of the first and the second passages and upstream of the turbine of the second turbocharger.

## Description

### Technical Field

The present invention relates to an exhaust heating device in an internal combustion engine provided with an exhaust purifying device, which can increase a temperature of an exhaust gas for activation of the exhaust purifying device and for maintaining an active state thereof.

### Background Art

A turbocharger which can relatively easily realize an increase in output of an internal combustion engine has a tendency of bringing in degradation of fuel consumption at the same time. Recently in response to a strong demand for the fuel consumption improvement in an internal combustion engine in which such a turbocharger is incorporated, an internal combustion engine having incorporated therein two turbochargers having different characteristics is proposed by Patent Literature 1 or Patent Literature 2. Any of them includes a first turbocharger functioning primarily in a low speed range of the internal combustion engine and a second turbocharger functioning primarily in a speed other than the low speed range, which are arranged in series to or in parallel to intake and exhaust passages.

Now, for meeting strict exhaust emissions regulations for an internal combustion engine, it is necessary to accelerate activation of an exhaust purifying device at the starting-up of the internal combustion engine or maintain the active state thereof during the operation of the internal combustion engine. Therefore an internal combustion engine in which an exhaust heating device is incorporated in an exhaust passage upstream of the exhaust purifying device is proposed by Patent Literature 3 or the like. This exhaust heating device generates heated gases in the exhaust gas, and supplies the generated heated gas to the downstream exhaust purifying device, thus accelerating the activation of the exhaust purifying device or maintaining the active state thereof. Therefore the exhaust heating device generally includes a fuel supply valve for supplying fuel into the exhaust passage, and an igniting device such as a glow plug for heating the fuel for ignition, thus generating heated gases. Further, for increasing a temperature of the heated gas, it is known also a compact oxidation catalytic converter disposed in the exhaust passage downstream of the igniting device. This oxidation catalytic converter includes itself a heat-generating function and a reforming function of fuel to a low carbon component, but differs in the configuration from an oxidation catalytic converter used as a part of the exhaust purifying device.

### Citation List

### Patent Literature

PTL 1: Japanese Patent Laid-Open No. 2008-255902
PTL 2: Japanese Patent Laid-Open No. 2009-270470
PTL 3: Japanese Patent Laid-Open No. 2006-112401

### Summary of Invention

### Technical Problem

It is apparent that an internal combustion engine that is excellent in all of output characteristics, fuel consumption, and clean exhaust gases will become an important technology in the future. From this point of view, it is considered to further incorporate the exhaust heating device in the internal combustion engine having incorporated the aforementioned exhaust turbochargers of a two-stage type therein.

In the exhaust heating device disclosed in Patent Literature 3, in an operating condition of the internal combustion engine in which an intake flow becomes large, a flow speed of an exhaust gas in the exhaust passage also increases relatively. Therefore there is a possibility that the fuel supplied to the exhaust passage from the fuel supply valve of the exhaust heating device can not remain in the periphery of the igniting device, and even if the fuel is ignited, the flame thereof is blown out by the flow of the exhaust gas, so that unburned fuel flows into the exhaust purifying device.

Meanwhile, in the internal combustion engine in which the exhaust turbochargers of a two-stage type are incorporated, there is a tendency that the exhaust flow becomes basically increased. Further, since the exhaust gas passes through each of exhaust turbines of the two turbochargers, an exhaust temperature largely reduces because of heat release to an outside or a heat capacity of the exhaust turbine itself. As a result, since the aforementioned problem more remarkably occurs, the exhaust heating device can be operated only at the time the exhaust flow is small, such as at deceleration of a vehicle.

An object of the present invention is to provide an exhaust heating device that can stably continue ignition of fuel in an internal combustion engine in which exhaust turbochargers of a two-stage type are incorporated.

### Solution to Problem

A first aspect of the present invention is an exhaust heating device for heating an exhaust gas fed to an exhaust purifying device from an internal combustion engine in which a first exhaust turbocharger and a second exhaust turbocharger used primarily in a lower speed range of the engine than the first turbocharger are incorporated. The exhaust heating device is disposed in a second exhaust passage so that the exhaust heating device is located upstream of a confluent portion of a first exhaust passage connected through an exhaust turbine of the first turbocharger to the purifying device and the second passage connected through an exhaust turbine of the second turbocharger to the purifying device in a state of bypassing the turbine of the first turbocharger and downstream of the turbine of the second turbocharger. A valve for regulating a flow of an exhaust gas in the second passage is disposed in the second passage so that the valve is located downstream of a branched portion of the first and second exhaust passages and upstream of the turbine of the second turbocharger.

In a case where it is necessary to operate the exhaust heating device in the present invention, an opening of the valve is adjusted to introduce a part of the exhaust gas to the second passage. A heated gas generated by the operation of the exhaust heating device mixes with an exhaust gas flowing in the first passage at the confluent portion of the second and first passages, which flows into the exhaust purifying device.

In the exhaust heating device for the engine according to the first aspect of the present invention, an opening/closing valve for opening/closing the first passage may be disposed in the first passage so that the opening/closing valve is located downstream of the branched portion of the first and second exhaust passages and upstream of the turbine of the first turbocharger.

The exhaust heating device may include a fuel supply valve for supplying fuel to the second passage, and an igniting unit for igniting and conflagrating the fuel supplied from the fuel supply valve to the second passage. In this case, an oxidation catalytic converter may be further disposed in the exhaust passage between the igniting unit and the exhaust purifying device.

In a case where the fuel is supplied from the fuel supply valve to the second passage, an opening of the valve may be adjusted such that a flow of the exhaust gas in the second passage is less than a flow of the exhaust gas in the first passage.

A second aspect of the present invention is a control method of the exhaust heating device according to the first aspect of the present invention including the fuel supply valve for supplying fuel to the second passage, and the igniting unit for igniting and conflagrating the fuel supplied from the fuel supply valve to the second passage. The control method comprises the steps of determining presence/absence of activation of the exhaust purifying device, detecting a rotational speed of the engine, setting an opening of the valve based upon the detected rotational speed of the engine, and in a case where it is determined that the exhaust purifying device is not activated, driving the valve to open in the set opening for flowing the exhaust gas of a predetermined flow rate in the second passage, and operating the exhaust heating device.

According to the present invention, in a case of an operating condition in which the second passage can be closed, for example, in a case where the engine is in a region other than a low-rotation region, the opening of the valve is adjusted to introduce the exhaust gas of a predetermined flow rate also to the second passage, while operating the exhaust heating device. The heated gas caused by the exhaust heating device interfluent with the exhaust gas flowing in the first passage at the confluent portion of the second and first passages, which flows into the exhaust purifying device.

In the control method of the exhaust heating device according to the second aspect of the present invention, in a case where it is determined that the exhaust purifying device is not activated, the step of driving the valve to open in the set opening for flowing the exhaust gas of a predetermined flow rate in the second passage, and operating the exhaust heating device may include a step of driving a first opening/closing valve such that the first passage is in a fully opened state. Advantageous Effects of Invention

According to the present invention, also in the internal combustion engine in which the exhaust turbocharger of the two-stage type is incorporated, the exhaust heating device can be stably operated by adjusting the opening of the valve. Further, the heated gas can efficiently interfluent with the exhaust gas flowing in the first passage at the confluent portion with the second exhaust passage.

In a case where the opening/closing valve for opening/closing the first passage is disposed in the first passage downstream of the branched portion of the first and second exhaust passages and upstream of the turbine of the first turbocharger, efficient power boost can be performed according to the operating condition of the engine.

In a case where the oxidation catalytic converter is disposed in the exhaust passage between the igniting unit and the exhaust purifying device, the heated gas can be highly increased in temperature more efficiently.

In a case where the opening of the valve is adjusted such that the flow of the exhaust gas in the first passage is less than the flow of the exhaust gas in the second passage, the stable heated gas can be more certainly generated.

In a case where the exhaust purifying device is not activated, when the first opening/closing valve is driven such that the first passage is in the fully opened state, the stable heated gas can interfluent with the exhaust gas flowing in the first passage at the confluent portion with the second exhaust passage.

### Brief Description of Drawings

[Fig. 1] Fig. 1 is a concept diagram showing an embodiment of an exhaust heating device in an internal combustion engine according to the present invention;
[Fig. 2] Fig. 2 is a control block diagram of a primary part of the embodiment shown in Fig. 1;
[Fig. 3] Fig. 3 is a graph representing a relation of an engine speed and a turbine speed; and
[Fig. 4] Fig. 4 is a flow chart representing the control procedure of the exhaust heating device shown in Fig. 1. Description of Embodiments

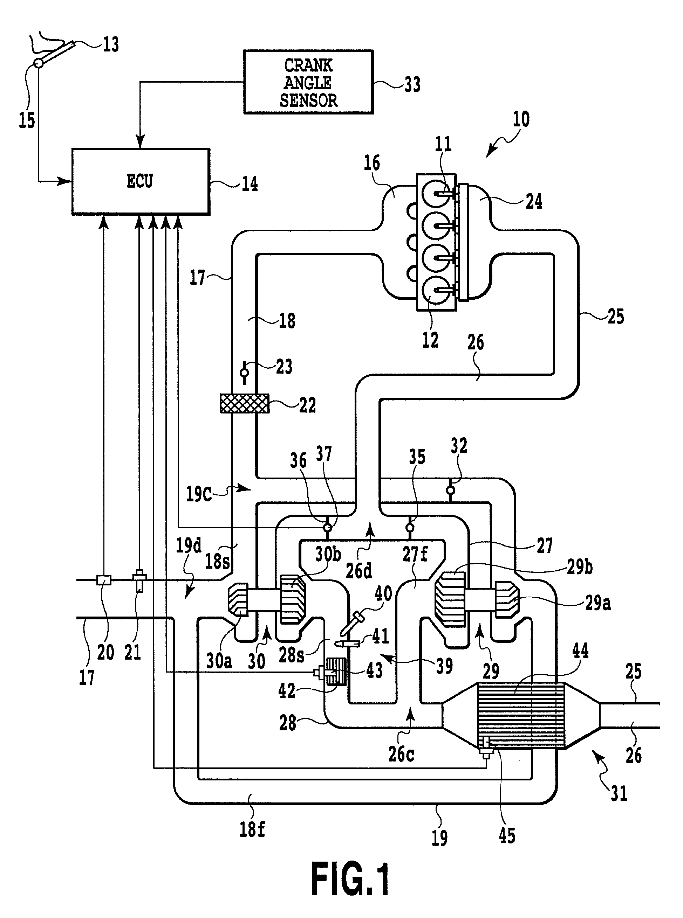

An embodiment in which the present invention is applied to an internal combustion engine of a compression-ignition type will be in detail explained with reference to Fig. 1 to Fig. 4. However, the present invention is not limited to this embodiment, and the configuration can be freely altered according to required characteristics. The present invention is effective also for a spark-ignition internal combustion engine in which, for example, gasoline, alcohol or LNG (liquid natural gas) is used as fuel and the fuel is ignited by a spark plug.

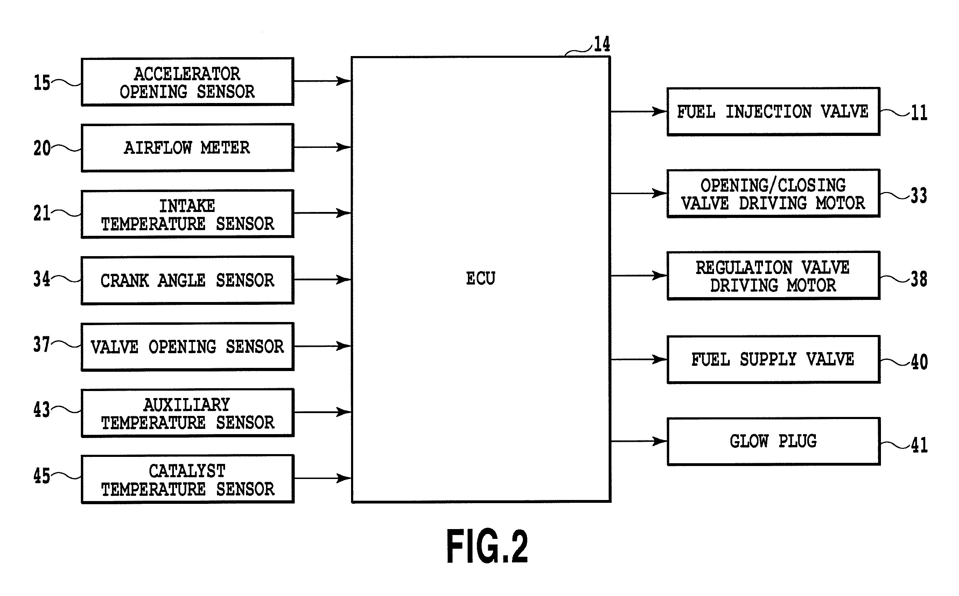

Fig. 1 diametrically shows a primary part of an engine system in the present embodiment, and Fig. 2 shows a control block diagram thereof, wherein a valve-operating mechanism for intake and exhaust valves, an EGR deice and the like are omitted in illustration for simplified purposes. An engine 10 in the present embodiment is a multi-cylinder internal combustion engine (in the illustrated example, four cylinders) of a compression-ignition type that causes spontaneous ignition by directly injecting light oil as fuel within a combustion chamber 12 in a compressed state from a fuel injection valve 11. However, a single-cylinder internal combustion engine may be adopted in view of the attribution of the present invention. The quantity and the injection timing of the fuel supplied in the combustion chamber 12 from the fuel injection valve 11 are controlled based upon an opening of an accelerator pedal 13 by a driver and an operating condition of a vehicle by an ECU (Electric Control Unit) 14. The opening of the accelerator pedal 13 is detected by an accelerator position sensor 15, and the detection information is outputted to the ECU 14, which is used for setting an injection quantity of the fuel from the fuel injection valve 11 and so forth.

An intake pipe 17 connected through an intake manifold 16 to the engine 10 defines an intake passage 18 together with the intake manifold 16, and includes a branched portion 19d and a confluent portion 19c to a branched intake pipe 19 at the upstream side and the downstream side. That is, both the ends of the branched intake pipe 19 are connected to the intake pipe 17 at the upstream branched portion 19d and at the downstream confluent portion 19c in the intake passage 18. In other words, a portion of the intake pipe 17 positioned between the upstream branched portion 19d and the downstream confluent portion 19c in the intake passage 18 and the branched intake pipe 19 are in a state of being arranged in parallel. In the present embodiment, the portion defined by the branched intake pipe 19 is called a first intake passage 18f for convenience in writing, and the portion defined by the intake pipe 17 positioned between the upstream branched portion 19d and the downstream confluent portion 19c in the intake passage 18 is called a second intake passage 18s.

An airflow meter 20 and an intake temperature sensor 21 are mounted to the intake pipe 17 upstream of the upstream branched portion 19d in the intake passage 18, and information regarding an intake flow rate and an intake temperature detected by these sensors is outputted to the ECU 14. The ECU 14 makes correction of the injection quantity of the fuel from the fuel injection valve 11 based upon the detection information from the airflow meter 20 and the intake temperature sensor 21 and so forth.

The intake pipe 17 downstream of the downstream confluent portion 19c in the intake passage 18 is provided with an intercooler 22 cooling intake air for increasing a charge density of the intake air flowing in the intake passage 18 and a throttle valve 23 for adjusting an opening of the intake passage 18. The throttle valve 23 in the present embodiment is mechanically linked to an opening of the accelerator pedal 13 a depressing amount of which is adjusted by a driver, but it is possible to adopt a throttle valve an opening of which can be electrically corrected according to an operating condition of a vehicle, without mentioning.

An exhaust pipe 25 connected through an exhaust manifold 24 to the engine 10 defines an exhaust passage 26 together with the exhaust manifold 24, and includes a branched portion 26d and a confluent portion 26c in regard to a pair of branched exhaust pipes 27 and 28 arranged in parallel in the exhaust pipe 25. That is, both the ends of the pair of the branched exhaust pipes 27 and 28 are connected to the exhaust pipe 25 at the upstream branched portion 26d and the downstream confluent portion 26c in the exhaust passage 26. In the present embodiment, a portion defined by the one branched exhaust pipe 27 corresponds to a first exhaust passage 27f in the present invention and a portion defined by the other branched exhaust pipe 28 corresponds to a second exhaust passage 28s in the present invention.

A first exhaust turbocharger (hereinafter, described simply as a first turbocharger) 29 is arranged across the first intake passage 18f and the first exhaust passage 27f, and a compressor 29a thereof is positioned in the first intake passage 18f, and an exhaust turbine 29b is positioned in the first exhaust passage 27f. In addition, a second turbocharger 30 used primarily in a lower speed range of the engine 10 than the first turbocharger 29 is arranged across the second intake passage 18s and the second exhaust passage 28s. A compressor 30a of the second turbocharger 30 is positioned in the second intake passage 18s, and an exhaust turbine 30b thereof is positioned in the second exhaust passage 28s. Therefore the second exhaust passage 28s branched from the upstream branched portion 26d joins with the first exhaust passage 27f at the downstream confluent portion 26c through the exhaust turbine 30b of the second turbocharger 30 in a state of bypassing the exhaust turbine 29b of the first turbocharger 29. An exhaust purifying device 31 is installed to the exhaust pipe 25 positioned downstream of the downstream confluent portion 26c in the exhaust passage 26.

An intake opening/closing valve 32 for opening/closing the first intake passage 18f is disposed in the first intake passage 18f downstream of the compressor 29a in the first turbocharger 29 and upstream of the branched portion 19d. An opening/closing valve driving motor 33 is connected to the intake opening/closing valve 32, and the ECU 14 controls an operation of the opening/closing valve driving motor 33 according to an operating condition of a vehicle to switch an opening/closing operation of the intake opening/closing valve 32. Basically in a case where an engine speed, that is, an engine rotation number Nₙ per unit time is equal or more than a rotation number N_{R} in which the first turbocharger 29 starts to achieve a turbocharging capability (hereinafter, described as a turbocharged state determining speed), the intake opening/closing valve 32 becomes in a fully opened state. In reverse, in a case where the engine speed Nₙ is less than the turbocharged state determining speed N_{R}, the intake opening/closing valve 32 is controlled to be in a substantially closed state. Therefore a crank angle position of the engine 10 is detected by a crank angle sensor 34, and the detection information is outputted to the ECU 14. The ECU 14 calculates an engine speed Nₙ based upon the information from the crank angle sensor 34.

Similarly, an exhaust opening/closing valve 35 for opening/closing the first exhaust passage 27f is disposed in the first exhaust passage 27f upstream of the exhaust turbine 29b of the first turbocharger 29 and downstream of the branched portion 26d. The aforementioned opening/closing valve driving motor 33 is connected to the exhaust opening/closing valve 35 in the present embodiment together with the intake opening/closing valve 32, and the exhaust opening/closing valve 35 is configured to open/close the first exhaust passage 27f to be substantially linked to the opening/closing operation of the intake opening/closing valve 32. However, an actuator may be independently connected to the exhaust opening/closing valve 35 to open/close the first exhaust passage 27f independently of the opening/closing operation of the intake opening/closing valve 32.

A flow regulating valve 36 for regulating a flow of an exhaust gas in the second exhaust passage 28s is disposed in the second exhaust passage 28s upstream of the exhaust turbine 29b of the first turbocharger 29 and downstream of the branched portion 26d. In addition, a valve opening sensor 37 is attached to the flow regulating valve 36 for detecting an opening thereof, and the detection information is outputted to the ECU 14. A regulation valve driving motor 38 which an operation thereof is controlled by the ECU 14 is also connected to the flow regulating valve 36, and the opening is adjusted based upon an operating condition of a vehicle and the detection information from the valve opening sensor 37.

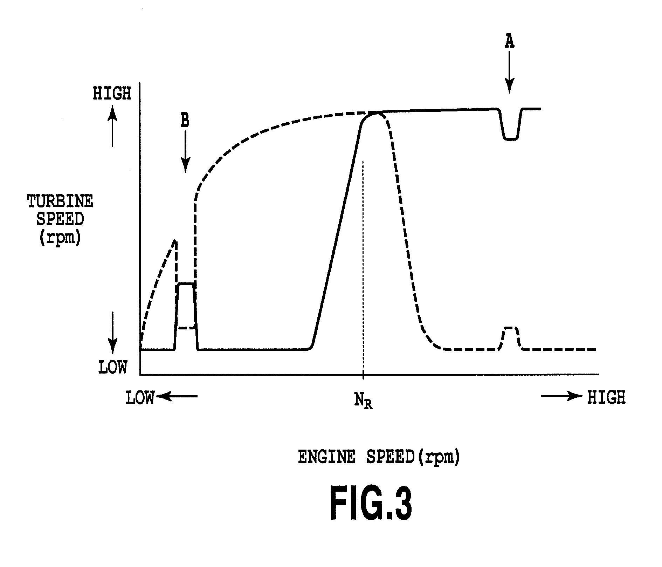

Characteristics of the first and second turbochargers 29 and 30 in the present embodiment are shown in Fig. 3. The first turbocharger 29 having a relatively large inertia mass does not almost have the turbocharging capability in a region in which the engine speed Nₙ is less than the turbocharged state determining speed N_{R}. In contrast, the second turbocharger 30 having a relatively small inertia mass is configured to achieve the turbocharging capability from a region of a low engine speed in which the first turbocharger 29 does not work.

Therefore the ECU 14, in a case where the engine speed Nₙ is less than the supercharging-state determination rotation number N_{R}, holds the intake opening/closing valve 32 and the exhaust opening/closing valve 35 in a fully closed state and basically holds the flow regulating valve 36 in a substantially fully opened state. Accordingly the intake and exhaust gases flow in the second intake passage 18s and the second exhaust passage 28s. In reverse, in a case where the engine speed Nₙ is equal to or more than the turbocharged state determining speed N_{R}, the ECU 14 holds the intake opening/closing valve 32 and the exhaust opening/closing valve 35 in a fully opened state and basically holds the flow regulating valve 36 in a fully closed state. Accordingly the intake and exhaust gases flow in the first intake passage 18f and the first exhaust passage 27f.

An exhaust heating device 39 is disposed in the second exhaust passage 28s upstream of the confluent portion 26c of the first exhaust passage 27f and the second exhaust passage 28s and downstream of the exhaust turbine 30b of the second turbocharger 30. The exhaust heating device 39 generates heated gases and supplies the heated gas to the exhaust purifying device 31 disposed in the downstream side to maintain the activation and the active state. The exhaust heating device 39 in the present embodiment is provided with a fuel supply valve 40, a glow plug 41 as an igniting unit in the present invention and an auxiliary oxidation catalytic converter 42 in that order from the upstream side.

The fuel supply valve 40 supplies fuel in the second exhaust passage 28s, and the supply timing and the supply quantity of the fuel are controlled by the ECU 14 based upon presence/absence of the active state of the exhaust purifying device 31 and the operating condition of the vehicle. The supply operation of the fuel from the fuel supply valve 40 into the second exhaust passage 28s is performed in a case where the exhaust purifying device 31 is in an inactive state. Accordingly even in an operating condition where it is not necessary to introduce an exhaust gas in the second exhaust passage 28s, that is, in an operating condition where it is not necessary to cause the second turbocharger 30 to function, the exhaust heating device 39 is operated as needed. In addition, even in a case where an exhaust gas is introduced to the second exhaust passage 28s to cause the second turbocharger 29 to function, the exhaust heating device 39 is operated as needed.

The glow plug 41, in a case where the fuel supplied in the second exhaust passage 28s from the fuel supply valve 40 does not cause spontaneous ignition, is provided for igniting the fuel. The glow plug 41 is connected to a direct current source (not shown) for supplying power thereto and a booster circuit, and a surface temperature thereof is controlled by the ECU 14. It should be noted that a ceramic heater may be used as the igniting unit in the present invention instead of the glow plug 41.

The auxiliary oxidation catalytic converter 42 is disposed in the exhaust passage 26 between the glow plug 41 and the exhaust purifying device 31. In the present embodiment, the auxiliary oxidation catalytic converter 42 is disposed in the second exhaust passage 28s upstream of the confluent portion 26c, but may be disposed in the exhaust passage 26 downstream of the confluent portion 26c. The auxiliary oxidation catalytic converter 42 has a cross-section area smaller than that of the second exhaust passage 28s, which therefore enables a part of the exhaust gas to pass without flowing in the auxiliary oxidation catalytic converter 42. That is, a flow speed of the exhaust gas passing through the auxiliary oxidation catalytic converter 42 is lower than that of the exhaust gas not passing through that, making it possible to further increase a temperature of the exhaust gas passing through the auxiliary oxidation catalytic converter 42. In a case where the auxiliary oxidation catalytic converter 42 is sufficiently increased in temperature, that is, is activated, it is possible to cut the power supply to the glow plug 41 for directly burning a mixture in the auxiliary oxidation catalytic converter 42. However, in a case where the auxiliary oxidation catalytic converter 42 is not activated, such as at a cold start of the engine 10, it is necessary to supply power to the glow plug 41. It should be noted that as the auxiliary oxidation catalytic converter 42 becomes high in temperature, a hydrocarbon having a large carbon number in the unburned mixture is decomposed to be reformed to a hydrocarbon having a small carbon number and high reactivity. In other words, the auxiliary oxidation catalytic converter 42 is, on the one hand, functions as a rapid heat generator itself rapidly generating heat, and on the other hand, functions also as a fuel reform catalyst generating the reformed fuel. In the present embodiment, there is provided an auxiliary temperature sensor 43 which detects a temperature of the auxiliary oxidation catalytic converter 42 and outputs the detected temperature to the ECU 14, wherein presence/absence of the power supply to the glow plug 41 is determined based upon the detection information from the auxiliary temperature sensor 43 by the ECU 14.

In this way, the heated gas is generated in the second exhaust passage 28s, the high-temperature exhaust gas passes through the auxiliary oxidation catalytic converter 42 to be increased further in temperature, and the unburned gas is also burned by the auxiliary oxidation catalytic converter 42 or reformed to a hydrocarbon having high activity. Then theses gases mix with the exhaust gas flowing in the first exhaust passage 27f at the confluent portion 26c, which are supplied to the exhaust purifying device 31. As a result, it is possible to quickly perform the activation of the exhaust purifying device 31 and perform maintenance of the active state thereof even at the time when a vehicle is travelling.

It should be noted that for increasing ignitability of the fuel injected in the second exhaust passage 28s from the fuel supply valve 40, it is effective to provide a plate-shaped vaporization promoting member to oppose the fuel supply valve 40 and the glow plug 41. The vaporization promoting member has a function that the fuel injected from the fuel supply valve 42 collides therewith to spread out, thus promoting atomization of the fuel, that is, vaporization thereof.

The exhaust purifying device 31 serves to make harmful substances generated by combustion of the mixture in the combustion chamber 12 harmless. The exhaust purifying device 31 in the present embodiment is provided with an oxidation catalytic converter 44, a three-way catalytic converter and a NOₓ catalytic converter in that order from the upstream side of the exhaust passage 26, but only the oxidation catalytic converter 44 disposed at the most upstream side end is illustrated for the sake of clarity. A catalyst temperature sensor 45 is incorporated in the oxidation catalytic converter 44 for detecting a temperature thereof and outputting the detected temperature to the ECU 14.

The ECU 14 controls the intake opening/closing valve 32 and the exhaust opening/closing valve 35, and the flow regulating valve 36 or the exhaust heating device 39, that is, operations of the fuel supply valve 40 and the glow plug 41, based upon an operating condition of a vehicle and detection signals from the auxiliary temperature sensor 43 and the catalyst temperature sensor 45. The control to these components is performed according to preset programs as follows. That is, in a case where a temperature Tₙ of the oxidation catalytic converter 44 (hereinafter described as a catalyst temperature) is less than a temperature T_{R} as an index of activation of the oxidation catalytic converter 44 (hereinafter described as an activation index temperature), based upon the detection signal from the catalyst temperature sensor 45, it is determined that the exhaust purifying device 31 is not activated, thereby operating the exhaust heating device 39. In reverse, in a case where the catalyst temperature Tₙ is equal to or more than the activation index temperature T_{R}, it is determined that the exhaust purifying device 31 is activated, thereby stopping the operation of the exhaust heating device 39. In addition, in a case where a temperature T_{Sn} of the auxiliary oxidation catalytic converter 42 (hereinafter described as an auxiliary catalyst temperature) is less than a temperature T_{SR} as an index of activation of the auxiliary oxidation catalytic converter 42 (hereinafter described as an activation index temperature), it is determined that the auxiliary oxidation catalytic converter 42 is not activated, thereby supplying power to the glow plug 41. In reverse, in a case where the auxiliary catalyst temperature T_{Sn} is equal to or more than the activation index temperature T_{SR}, it is determined that the auxiliary oxidation catalytic converter 42 is activated, thereby stopping the power supply to the glow plug 41. On the other hand, in a case of operating the exhaust heating device 39 in a state where the engine speed Nₙ is equal to or more than the turbocharged state determining speed N_{R}, for achieving the supercharging pressure required, the flow regulating valve 36 is held in a slightly opened state while holding the opening/closing valve 32 in a fully opened state, and also an opening of the opening/closing valve 35 is controlled. In this way, the introduction of a part of the exhaust gas to the second exhaust passage 28s enables the fuel to be ignited and prevents the misfiring (as an example, characteristics are shown as an arrow view A in Fig. 3). In reverse, in a state where the engine speed Nₙ is less than the turbocharged state determining speed N_{R}, there is a possibility that in a state where the flow controlling valve 36 is held in a fully opened state, the fuel supplied to the second exhaust passage 28s and ignited therein is misfired. Accordingly in this case, the opening/closing valve 32 is switched from the fully closed state to the fully opened state, the flow regulating valve 36 is held in a slightly opened state from the fully opened state, and the opening of the opening/closing valve 35 is controlled, thus introducing the required quantity of the exhaust gas to the second exhaust passage 27s. Thereby a large part of the exhaust gas is introduced to the first exhaust passage 27f to prevent occurrence of the misfiring of the fuel supplied to the second exhaust passage 28s (as an example, characteristics are shown as an arrow view B in Fig. 3).

In this way, the opening of the aforementioned flow regulating valve 36 is regulated such that the fuel supplied from the fuel supply valve 40 in the aforementioned exhaust heating device 39 to the second exhaust passage 28s is not misfired. That is, the flow of the exhaust gas introduced to the second exhaust passage 28s is made less than the flow of the exhaust gas in the first exhaust passage 27f. More specifically the opening of the flow regulating valve 36 is set through a regulation valve driving motor 38 by the ECU 14 such that the exhaust gas having the flow speed to the extent that the flame caused by ignition of the fuel in the second exhaust passage 28s is not misfired flows in the second exhaust passage 28s. Thereby a predetermined flow rate of the exhaust gas to the extent that the misfiring does not occur can be made to flow in the second exhaust passage 28s, and the heated gas obtained by the exhaust heating device 39 can be fed to the exhaust purifying device 31.

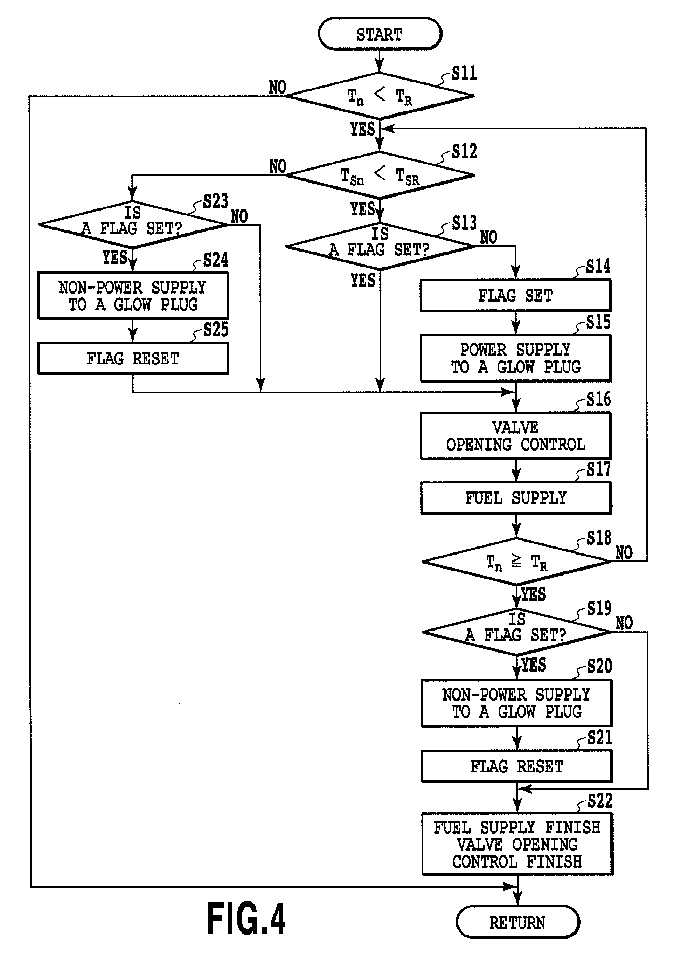

The control procedure of such an exhaust heating device 39 is shown in a flow chart of Fig. 4. That is, in a step of S11, it is determined whether or not the temperature Tₙ of the oxidation catalytic converter 44 detected by the catalyst temperature sensor 45 is less than the activation determination reference temperature T_{R}. Here, in a case where it is determined that since the temperature Tₙ of the oxidation catalytic converter 44 is equal to or more than the activation determination reference temperature T_{R}, that is, since the exhaust purifying device 31 is activated, it is not necessary to operate the exhaust heating device 39, the determining process in a step of S11 continues to be performed without any processing. In addition, in a case where it is determined in a step of S11 that since the temperature Tₙ of the oxidation catalytic converter 44 is less than the activation determination reference temperature T_{R}, that is, since the exhaust purifying device 31 is in an inactive state, it is necessary to operate the exhaust heating device 39, the process goes to a step of S12. In a step of S12, it is determined whether or not the temperature T_{Sn} of the auxiliary oxidation catalytic converter 42 detected by the auxiliary temperature sensor 43 is less than the activation determination reference temperature T_{SR}. Here, in a case where it is determined that since the temperature T_{Sn} of the auxiliary oxidation catalytic converter 42 is less than the activation determination reference temperature T_{SR}, that is, since the auxiliary oxidation catalytic converter 42 is in an inactive state, it is necessary to supply power to the glow plug 41, the process goes to a step of S13. In a step of S13, it is determined whether or not a flag for supplying the power to the glow plug 41 is set. Since at first this flag is not set, the process goes to a step of S14, wherein the flag is set and in a step S15, the power supply to the glow plug 41 is performed, and in a step of S15, the opening of the flow regulating valve 36 is set based upon the engine speed Nₙ.

For example, in a state where the engine speed Nₙ is less than the turbocharged state determining speed N_{R}, the flow regulating valve 36 is in a fully opened state and the opening/closing valves 32 and 35 are in a fully closed state. Therefore in a case where the fuel supplied to the second exhaust passage 28s is ignited by the glow plug 41, the flow regulating valve 36 is throttled from the fully opened state such that the flow speed of the exhaust gas becomes a flow speed to the extent that the ignited fuel is not misfired, and the opening/closing valves 32 and 35 are switched to a fully opened state. Thereby the flow of the exhaust gas in the second exhaust passage 28s is throttled and the remaining exhaust gas is introduced to the first exhaust passage 27f. In addition, in a state where the engine speed Nₙ is equal to or more than the turbocharged state determining speed N_{R}, the flow regulating valve 36 is in a fully closed state, and the opening/closing valves 32 and 35 are in a fully opened state. Therefore in order that the fuel supplied to the second exhaust passage 28s can be ignited, the flow regulating valve 36 is slightly opened from the fully closed state, and the opening of the opening/closing valve 35 is controlled, thus introducing the required quantity of the exhaust gas also to the second exhaust passage 27s.

Next, in a step of S17 the fuel is injected to the second exhaust passage 28s from the fuel supply valve 40. Thereby the fuel is ignited in the second exhaust passage 28s in which the exhaust gas slightly flows, and the obtained heated gas is further increased in temperature by the auxiliary oxidation catalytic converter 42. In addition, the heated gas interfluent with the exhaust gas flowing from the confluent portion 26c with the first exhaust passage 27f at the confluent portion 26c, which is led to the exhaust purifying device 31 to increase a temperature of the exhaust purifying device 31. Next, in a step of S18 it is determined whether or not the temperature Tₙ of the oxidation catalytic converter 44 detected by the catalyst temperature sensor 45 is equal to or more than the activation determination reference temperature T_{R}. Here, in a case where it is determined that since the temperature Tₙ of the oxidation catalytic converter 44 is less than the activation determination reference temperature T_{R}, that is, since the oxidation catalytic converter 44 is in an inactive state, it is necessary to continue the operation of the exhaust heating device 39, the process goes back to a step of S12, wherein the previous process is repeated. In addition, in a case where it is determined that since the temperature Tₙ of the oxidation catalytic converter 44 is equal to or more than the activation determination reference temperature T_{R}, that is, since the oxidation catalytic converter 44 becomes in an active state, it is necessary to stop the operation of the exhaust heating device 39, the process goes to a step of S19. In a step of S19 it is determined whether or not the flag is set. In a case where it is determined that the flag is set, in a step of S20 the power supply to the glow plug 41 is stopped, and next, in a step of S21 the flag is reset. After that, in a step of S22 supply of the fuel from the fuel supply valve 40 is stopped and the valve opening control in a step of S16 is finished, and the process again returns to the determination step of S11. As a result, the opening/closing state of each of the opening/closing valves 32 and 35 and the flow regulating valve 36 is controlled such that the first and second turbochargers 29 and 30 operate the most efficiently in response to the engine speed Nₙ.

On the other hand, in a case where it is determined that the flag is set in the previous step of S13, that is, in a case where it is determined that the glow plug 41 is in a power-supplied state, the process goes to a step of S16 as it is, wherein the operation of the exhaust heating device 39 continues.

In a case where in the previous step of S12 it is determined that since the temperature T_{Sn} of the auxiliary oxidation catalytic converter 42 is equal to or more than the activation determination reference temperature T_{SR}, that is, since the auxiliary oxidation catalytic converter 42 is in an active state, it is not necessary to perform the power supply to the glow plug 41, the process goes to a step of S23. In a step of S23 it is determined whether or not the flag is set. In a case where it is determined that the flag is set, that is, in a case where it is determined that the power supply to the glow plug 41 is performed, the process goes to a step of S24, wherein the power supply to the glow plug 41 is stopped, and next, in a step of S21 the flag is reset. After that, the process goes to the previous step of S16, wherein the operation of the exhaust heating device 39 continues. On the other hand, in a case where it is determined that the flag is not set in a step of S23, that is, in a case where it is determined that the glow plug 41 is in a non-power supply state, the process goes to a step of S16 as it is, wherein the operation of the exhaust heating device 39 continues.

It should be noted that the present invention should be interpreted only by the matters described in claims, and in the above-described embodiment, it is possible to perform all changes and modifications contained in the concept of the present invention other than the described matters. That is, all the matters in the above-described embodiment should not be the limitation to the present invention, and, including all configurations not related directly to the present invention, can be arbitrarily changed according to its application and purpose.

### Reference Signs List

- 10: Engine
- 11: Fuel injection valve
- 12: Combustion chamber
- 13: Accelerator pedal
- 14: ECU
- 15: Accelerator position sensor
- 16: Intake manifold
- 17: Intake pipe
- 18: Intake passage
- 18f: First intake passage
- 18s: Second intake passage
- 19: Intake bypass passage
- 20: Intake bypass pipe
- 20d: Branched portion
- 20c: confluent portion
- 21: Airflow meter
- 22: Intake temperature sensor
- 23: Intercooler
- 24: Throttle valve
- 25: Intake bypass valve
- 26: Bypass valve driving motor
- 27: Exhaust passage
- 27f: First exhaust passage
- 27s: Second exhaust passage
- 28: Exhaust pipe
- 29: First exhaust bypass passage
- 30: First exhaust bypass pipe
- 30d: Branched portion
- 30c: Confluent portion
- 31: First exhaust bypass valve
- 32: Second exhaust bypass passage
- 33: Second exhaust bypass pipe
- 33d: Branched portion
- 33c: Confluent portion
- 34: Second exhaust bypass valve
- 35: Second bypass valve driving motor
- 36: First turbocharger
- 36a: Compressor
- 36b: Exhaust turbine
- 37: Second turbocharger
- 37a: Compressor
- 37b: Exhaust turbine
- 38: Exhaust purifying device
- 39: Oxidation catalytic converter
- 40: Catalyst temperature sensor
- 41: Flow regulating valve
- 42: Valve opening sensor
- 43: Regulation valve driving motor
- 44: Exhaust heating device
- 45: Fuel supply valve
- 46: Glow plug
- 47: Auxiliary oxidation catalytic converter
- 48: Auxiliary temperature sensor
- 49: Crank angle sensor
- Nₙ: Engine speed
- N_{R}: Turbocharged state determining speed
- Tₙ: Catalyst temperature
- T_{R}: Activation index temperature
- T_{Sn}: Auxiliary catalyst temperature
- T_{SR}: Activation index temperature

## Claims

1. An exhaust heating device for an internal combustion engine for heating an exhaust gas fed to an exhaust purifying device from the internal combustion engine in which a first exhaust turbocharger and a second exhaust turbocharger used primarily in a lower speed range of the internal combustion engine than the first exhaust turbocharger are incorporated, wherein
the exhaust heating device is disposed in a second exhaust passage positioned upstream of a confluent portion of a first exhaust passage connected through an exhaust turbine of the first exhaust turbocharger to the exhaust purifying device and the second exhaust passage connected through an exhaust turbine of the second exhaust turbocharger to the exhaust purifying device in a state of bypassing the exhaust turbine of the first exhaust turbocharger and downstream of the exhaust turbine of the second exhaust turbocharger, and
a valve for regulating a flow of an exhaust gas in the second exhaust passage is disposed in the second exhaust passage downstream of a branched portion of the first exhaust passage and the second exhaust passage and upstream of the exhaust turbine of the second exhaust turbocharger.

2. The exhaust heating device for the internal combustion engine as claimed in claim 1, wherein an opening/closing valve for opening/closing the first exhaust passage is disposed in the first exhaust passage downstream of the branched portion of the first exhaust passage and the second exhaust passage and upstream of the exhaust turbine of the first exhaust turbocharger.

3. The exhaust heating device for the internal combustion engine as claimed in claim 1 or 2, wherein the exhaust heating device includes a fuel supply valve for supplying fuel to the second exhaust passage, and an igniting unit for igniting and conflagrating the fuel supplied from the fuel supply valve to the second exhaust passage.

4. The exhaust heating device for the internal combustion engine as claimed in claim 3, wherein an oxidation catalytic converter is disposed in the exhaust passage between the igniting unit and the exhaust purifying device.

5. The exhaust heating device for the internal combustion engine as claimed in claim 3 or 4, wherein in a case of igniting the fuel using the igniting unit, an opening of the valve is regulated such that a flow of the exhaust gas in the second exhaust passage is less than a flow of the exhaust gas in the first exhaust passage.

6. A control method of the exhaust heating device as claimed in any one of claims 3 to 5, comprising the steps of:
determining presence/absence of activation of the exhaust purifying device;
detecting a rotational speed of the internal combustion engine;
setting an opening of the valve based upon the detected rotational speed of the internal combustion engine; and
in a case where it is determined that the exhaust purifying device is not activated, driving the valve to open in the set opening for flowing the exhaust gas of a predetermined flow in the second exhaust passage, and operating the exhaust heating device.

7. The control method of the exhaust heating device as claimed in claim 6, wherein in a case where it is determined that the exhaust purifying device is not activated, the step of driving the valve to open in the set opening for flowing the exhaust gas of a predetermined flow in the second exhaust passage and operating the exhaust heating device includes a step of driving the first opening/closing valve such that the first exhaust passage is in a fully opened state.
